(19) Europäisches Patentamt

European Patent Office

Office européen des brevets

(11) **EP 4 745 626 A1**

(12) **DEMANDE DE BREVET EUROPEEN**

(43) Date de publication:
**20.05.2026 Bulletin 2026/21**

(21) Numéro de dépôt: **25215964.5**

(22) Date de dépôt: **14.11.2025**

(51) Classification Internationale des Brevets (IPC):
***G01S 19/08*** (2010.01)

(52) Classification Coopérative des Brevets (CPC):
**G01S 19/08;** G01S 19/20; G01S 19/21; G01S 19/22

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **14.11.2024 FR 2412410**

(71) Demandeur: **THALES**
**92190 Meudon (FR)**

(72) Inventeurs:
• **LAGRANGE, Olivier**
**31670 LABEGE (FR)**
• **OLIVIER, Maxime**
**31670 LABEGE (FR)**

(74) Mandataire: **Lavoix**
**2, place d'Estienne d'Orves**
**75441 Paris Cedex 09 (FR)**

(54) **PROCÉDÉ DE SURVEILLANCE D ANOMALIES AFFECTANT DES SIGNAUX D'UN SYSTÈME DE NAVIGATION PAR SATELLITES ; PROGRAMME D ORDINATEUR ET SYSTÈME DE SURVEILLANCE ASSOCIÉS**

(57) Ce procédé (100) consiste à : acquérir (130) des données auprès d'une pluralité de sources qui agrègent des mesures instantanées de grandeurs GNSS déterminées par des récepteurs GNSS répartis géographiquement pour couvrir une zone géographique d'intérêt ; calculer (134) des premiers indicateurs d'anomalie, chaque premier indicateur étant obtenu en appliquant un algorithme de multicorrélation à un groupe de plusieurs grandeurs ; calculer (136) des seconds indicateurs d'anomalie, chaque second indicateur étant obtenu en appliquant un algorithme de traitement statistique sur une unique grandeur ; fusionner (138) les premiers et seconds indicateurs dans des indicateurs globaux ; générer (142) une alerte lorsqu'une règle d'occurrence fonction des indicateurs globaux est vérifiée.

FIG.2

**Description**

L'invention a pour domaine celui de la navigation par satellites. Plus particulièrement, l'invention a pour domaine celui des infrastructures et des applications (ou missions) qui, dans leur fonctionnement nominal, nécessitent des informations fournies par un ou plusieurs systèmes de navigation par satellites - ou systèmes GNSS (« Global Navigation Satellite System »), tels que le système GPS ou le système Galileo.

Les systèmes GNSS émettent des signaux de positionnement et de synchronisation, dits signaux GNSS. Ces signaux sont utilisés par les utilisateurs dotés de récepteurs GNSS, qui, de manière active, les exploitent pour la géolocalisation (détermination de la position et de la vitesse instantanées) et la datation absolue, et ceci avec une certaine précision.

De nombreuses infrastructures et missions critiques utilisent les systèmes GNSS. Leur fonctionnement nominal est dépendant de la qualité des services offerts à chaque instant par les systèmes GNSS et des performances qui en découlent. C'est le cas par exemple dans les domaines de l'aviation civile, des drones, du lancement spatial, des véhicules terrestres autonomes, pour principalement des besoins de localisation, ou encore, dans les domaines du transport d'énergie, pour des besoins de datation, dans les domaines bancaires et financiers, pour des besoins de synchronisation des transactions.

Cependant, les services délivrés par les systèmes GNSS, en particulier publics (ou OS - « Open Service »), qui sont les plus largement utilisés et dont la structure et les données sont parfaitement connues, sont fournis au travers de signaux de faible puissance. Les signaux GNSS sont donc vulnérables aux potentielles dégradations, ce qui peut avoir un impact sur la continuité et la sécurité des infrastructures et/ou missions utilisant ces signaux GNSS.

Dans le présent document, par anomalie, on entend tout évènement conduisant à une perturbation anormale et non prévisible des signaux et informations fournies par les systèmes GNSS aux utilisateurs finaux.

Il s'agit en particulier des anomalies suivantes :

- pannes ou manœuvres d'un ou plusieurs des satellites d'une constellation ;
- scintillation ionosphérique, définie comme une variation anormale du contenu total en électrons de l'ionosphère (ou TEC - « Total Electron Content »), liée par exemple à des évènements comme les éruptions solaires. Ce type d'anomalies influent fortement sur la variation de vitesse et donc sur les délais des signaux GNSS ;
- multi-trajets, définis comme la présence d'interférences GNSS dues à la réflexion ou la réfraction des signaux GNSS par l'environnement local d'un récepteur GNSS.

Particulièrement présents en environnement urbain, ils conduisent à la dégradation de la qualité des signaux GNSS reçus, et par conséquent, des capacités du récepteur GNSS à déterminer avec précision sa position, sa vitesse et/ou la date ;

- les erreurs ou pannes affectant les récepteurs GNSS eux-mêmes ;

et, tout particulièrement :

- le brouillage des signaux GNSS (ou « jamming » en anglais), défini comme la dégradation de la réception des signaux GNSS par émission de signaux de bruit de plus haute puissance sur la même bande de fréquence. Le brouillage, intentionnel ou non, induit un déni de service pour les récepteurs GNSS présents dans la zone d'impact, pour lesquels les signaux GNSS ne sont plus exploitables ou voient leur qualité fortement dégradée. A part les zones de guerres, où le brouillage des signaux GNSS est fréquemment employé, une recrudescence du brouillage est constatée depuis plusieurs années, par exemple aux abords des aéroports, perturbant le trafic aérien. En particulier, selon les normes de sécurité aéronautiques en vigueur, lorsque le signal GNSS est insuffisant dans la zone géographique d'un aéroport, le trafic aérien peut être perturbé, voire interrompu, le temps d'identifier et de neutraliser le dispositif source du brouillage par les autorités compétentes ; et
- le leurrage (ou « spoofing » en anglais) des signaux GNSS, défini comme l'émission de signaux GNSS falsifiés pour perturber les récepteurs GNSS dans la zone d'impact, en modifiant les résultats du calcul de la position, de la vitesse et/ou de datation. Les méthodes de leurrage peuvent notamment permettre de détourner de leur trajectoire des véhicules autonomes et représentent un danger majeur, en particulier pour la sécurité des biens et des personnes.

Bien que les phénomènes de multi-trajets et de scintillation ionosphérique représentent un défi sur le maintien des performances de positionnement et datation, le brouillage et le leurrage des signaux GNSS représentent actuellement un enjeu majeur dans la mesure où ils mettent en jeu directement la sécurité des biens et des personnes.

Si des solutions connues permettent à ce jour de protéger les récepteurs GNSS contre le brouillage et le leurrage, elles reposent essentiellement sur la mise en œuvre de matériels dédiés, complexes et très coûteux, s'appuyant en particulier sur des algorithmes avancés de traitement du signal.

**EP 4 745 626 A1**

Ils sont par conséquent d'un déploiement limité et ne sont pas associés à des dispositifs de surveillance permettant de remonter des alertes vers les opérateurs et/ou les utilisateurs d'une infrastructure / application cible en cas de détection de perturbation des signaux GNSS.

Il n'existe donc actuellement pas de solution qui garantisse la surveillance fiable, que ce soit au niveau mondial, national ou local, des anomalies affectant les services fournis par les systèmes de navigation par satellites - GNSS, et qui permette de détecter, classifier et cartographier en temps réel la survenue d'anomalies, quelle que soit leur nature, et d'émettre des alertes circonstanciées vers les opérateurs et/ou les utilisateurs d'une infrastructure ou mission cible, dont le fonctionnement nominal dépend de la fiabilité des signaux et données GNSS.

L'invention a donc pour but de répondre à ce besoin en proposant un système de surveillance, classification, cartographie et alerte en temps réel des anomalies pouvant affecter les utilisateurs des systèmes GNSS.

Pour cela, l'invention a pour objet un procédé, mis en œuvre par ordinateur, de surveillance d'anomalies affectant des signaux d'un système de navigation par satellites - GNSS en visibilité d'une zone géographique d'intérêt, dit signaux GNSS, caractérisé en ce que le procédé consiste à : acquérir des données auprès d'une pluralité de sources de données, chaque source de données de la pluralité de sources de données agrégeant des données issues d'une pluralité de dispositifs de réception, chaque dispositif de réception intégrant un récepteur GNSS adapté pour traiter les signaux GNSS de manière à déterminer des premières grandeurs, les données comportant des valeurs instantanées des premières grandeurs, calculées par le récepteur GNSS d'un dispositif de réception, et/ou des valeurs instantanées de secondes grandeurs, une seconde grandeur étant déterminée par ledit dispositif de réception à partir d'une ou plusieurs premières grandeurs calculées par le récepteur GNSS dudit dispositif de réception, les dispositifs de réception de la pluralité de dispositifs de réception étant géographiquement répartis pour obtenir une couverture couvrant au moins la zone géographique d'intérêt ; prétraiter les données acquises pour obtenir des données prétraitées, chaque données prétraitée prenant la forme d'une série temporelle ; calculer un ou plusieurs premiers indicateurs d'anomalie, chaque premier indicateur d'anomalie étant obtenu en appliquant un algorithme de multicorrélation à un groupe de plusieurs données prétraitées ; calculer un ou plusieurs seconds indicateurs d'anomalie pour chaque données prétraitée, considérée individuellement, par application d'un algorithme de traitement statistique ; fusionner les premiers et seconds indicateurs d'anomalie pour obtenir des indicateurs globaux d'anomalie, chaque indicateur global d'anomalie étant indicatif d'une probabilité d'occurrence d'un type d'anomalie particulier ; générer une alerte d'occurrence d'un évènement relevant d'un type d'anomalie, lorsqu'une règle d'occurrence adaptée audit type d'anomalie est vérifiée, ladite règle d'occurrence étant fondée sur le ou les indicateurs globaux associés audit type d'anomalie.

Suivant des modes particuliers de réalisation, le procédé comporte une ou plusieurs des caractéristiques suivantes, prises isolément ou suivant toutes les combinaisons techniquement possibles :

- le type d'anomalie relève : d'une panne d'au moins un satellite du GNSS ; d'une manœuvre d'au moins un satellite du GNSS ; d'un brouillage ; d'un leurrage ; d'un multi-trajets ; d'une scintillation ionosphérique : ou d'une panne de récepteur GNSS ;
- le procédé comporte en outre une étape d'association des indicateurs globaux caractérisant le type d'anomalie d'un brouillage et/ou le type d'un leurrage, à une position géographique à partir d'une position des dispositifs de réception ayant permis de générer l'alerte d'occurrence de l'évènement correspondant ;
- le procédé comporte en outre une estimation d'une localisation du matériel d'interférence responsable de l'évènement ;
- le procédé comporte en outre une étape d'affichage de l'alerte générée sur une interface homme-machine et/ou une étape de notification de l'alerte générée à un système utilisateur impacté par l'évènement ;
- les premières grandeurs comportent, pour chaque dispositif de réception et pour chaque satellite du GNSS en visibilité dudit dispositif de réception une mesure du C/N0, du Doppler, d'une pseudo-distance, et d'une phase, ainsi que des informations relatives aux éphémérides diffusées par chaque satellite du GNSS ;
- les secondes grandeurs comportent, pour chaque dispositif de réception du type système de vol d'un d'aéronef, une position, une altitude, une vitesse, un cap et une trajectoire de l'aéronef, et une ou plusieurs informations relatives aux performances de navigation ;
- l'étape de fusion met en œuvre un algorithme de logique floue ;
- l'étape de prétraitement consiste à appliquer un algorithme de compensation entre plusieurs premières grandeurs ;
- l'alerte générée est transmise à un utilisateur final dont un système est impacté par l'évènement associée à l'alerte, afin de mettre en œuvre une contremesure adaptée ;
- les première grandeurs sont des données GNSS et les secondes grandeurs sont des données ADS-B et/ou AIS ;
- les sources de données comportent : des sources de données gérées par des fournisseurs de données, publiques et/ou commerciales, de couverture mondiale et/ou nationale ; et/ou des sources de données privées, associées à des récepteurs GNSS d'opportunité ou déployés spécifiquement, de couverture locale.

L'invention a également pour objet un produit programme d'ordinateur pour la mise en œuvre du procédé précédent.

L'invention a également pour objet un système de surveillance pour la mise en œuvre du procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

La figure 1 est une représentation schématique, sous forme de modules fonctionnels, d'un mode de réalisation préféré d'un système de surveillance pour une mise en œuvre du procédé de surveillance selon l'invention ; et,

La figure 2 est une représentation, sous forme de blocs, d'un mode de réalisation préféré du procédé de surveillance selon l'invention.

Le procédé de surveillance selon l'invention assure une collecte massive de données relatives aux signaux GNSS et issues d'une pluralité de sources de données de natures différentes, publiques et privées, leur traitement par des méthodes de « crowdsourcing » et d'hybridation, pour détecter, classifier et cartographier les anomalies affectant les signaux GNSS, en particulier le brouillage et/ou le leurrage des signaux GNSS.

On considère une zone géographique cible 1 en tant que zone à surveiller. Par exemple, une infrastructure critique 3 se trouve à l'intérieur de la zone cible 1. Il s'agit par exemple d'un aéroport. Le bon fonctionnement de l'infrastructure critique 3 s'appuie sur au moins un système de navigation par satellites, ou système GNSS, 2.

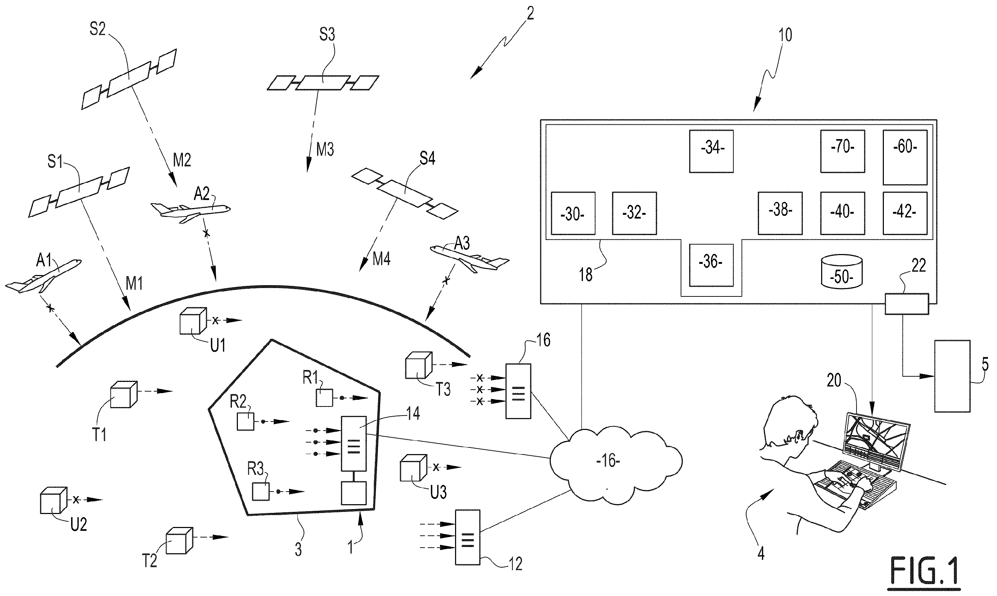

La composante satellitaire du système GNSS 2 est constituée d'une ou plusieurs constellations de satellites. Ces derniers sont par exemple référencés S1, S2, S3 et S4 sur la figure 1. Ils émettent en continu des signaux GNSS sur différentes bandes de fréquences. Ces signaux GNSS sont par exemple référencés M1, M2, M3 et M4 sur la figure 1.

Le système de surveillance 10 collecte systématiquement et massivement des données provenant de diverses sources de données, selon une optique qui consiste à valoriser les données préexistantes plutôt que de mettre en œuvre du matériel spécifique performant mais coûteux, impliquant notamment des algorithmes avancés de traitement du signal.

Chaque source de données rassemble les données issues d'une pluralité de dispositif de réception, chaque dispositif de réception étant équipé d'un récepteur GNSS.

Un premier type de dispositifs de réception est constitué par des stations GNSS au sol, appartenant à des réseaux mondiaux ou nationaux, publics ou commerciaux. Ces stations GNSS au sol sont par exemple référencées T1, T2 et T3 sur la figure 1. Elles traitent les signaux GNSS émis par les satellites, sur une ou plusieurs bandes de fréquences. Les données issues de chaque station GNSS sont des valeurs instantanées de premières grandeurs GNSS. Elles sont mises à disposition, en temps réel, par des moyens réseau. Cette mise à disposition s'effectue par des moyens réseau adaptés, par exemple du type serveur de données accessible via un réseau de communication. Par exemple, le protocole NTRIP (« Network and Transport of RTCM via Internet Protocol ») permet de transmettre des données de navigation (éphémérides), des mesures de signaux GNSS, ou des corrections cinématiques en temps réel de type - RTK (« Real Time Kinematic »), via l'Internet, à des récepteurs GNSS utilisateur des services offerts par ces stations GNSS au sol.

Un second type de dispositifs de réception est constitué par les équipements GNSS au sol qui sont présents dans la zone géographique d'intérêt 1. Il s'agit de récepteurs GNSS, privés, préexistants (récepteurs dits « d'opportunité ») ou déployés spécifiquement dans le but de densifier le réseau de capteurs dont les mesures sont exploitées par le dispositif de surveillance 10. Ces équipements GNSS sont par exemple référencés R1, R2 et R3 sur la figure 1. Les données issues ces équipements GNSS sont également des valeurs instantanées de premières grandeurs GNSS. Elles sont mises à disposition, en temps réel, par des moyens réseau.

Avantageusement, dans le mode de réalisation préféré ici décrit, un troisième type de dispositif de réception est constitué par les systèmes de vol des aéronefs en circulation, en particulier ceux transmettant des messages ADS-B. C'est notamment le cas des aéronefs de l'aviation civile commerciale. Ces aéronefs sont référencés A1, A2 et A3 sur la figure 1 et les messages ADS-B qu'ils émettent sont référencés L1, L2 et L3 sur la figure 1. Les messages ADS-B contiennent les valeurs instantanées de secondes grandeurs ADS-B. Une seconde grandeur ADS-B est calculée par le système de vol à partir des premières grandeurs GNSS délivrées à chaque instant par le récepteur GNSS du système de vol. Les messages ADS-B diffusés par les aéronefs sont captés, traités, enregistrés et mis à disposition par des stations ADS-B au sol fonctionnant en temps réel. Ces stations ADS-B, équipées de récepteurs ADS-B, sont par exemple référencées U1, U2 et U3 sur la figure 1. Ces grandeurs sont mises à disposition, en temps réel, par des moyens réseau.

Les grandeurs GNSS comportent des informations de navigation (éphémérides des satellites) et des observables (mesures de pseudo-distance, phase, Doppler, et C/N0).

Les grandeurs ADS-B diffusées par un aéronef comportent par exemple:

- la position, l'altitude et la vitesse indiquées dans un signal ADS-B, qui sont estimées à partir des données GNSS embarqué et d'autres données délivrées par des capteurs embarqués (senseurs inertiels, magnétomètres etc.) ;
- le niveau de précision de navigation - NAS (« Navigation Accuracy Category »), sur la position calculée par exemple, qui dépend des données GNSS ;

- le niveau d'intégrité de navigation - NIC (« Navigation Integrity Category »), qui indique le niveau d'intégrité courant selon des indicateurs définis par le système de navigation, qui dépend également des données GNSS ; etc.

Le système de surveillance selon l'invention, 10, offre un service de surveillance et d'alerte.

Sa précision est dépendante de la densité du réseau de récepteurs GNSS dont les données sont collectées, selon les zones à surveiller, à l'échelle mondiale, nationale, ou locale (l'échelle locale correspondant à la zone géographique cible 1).

Au travers d'une interface homme-machine - **IHM** 20, le système 10 fournit à un opérateur 4 des indicateurs de suivi des différents types d'anomalies pouvant affecter le système GNSS 2 et génère des alertes circonstanciées pour anticiper la gestion de crise.

Avantageusement, le système 10 dispose d'une interface de programmation d'application - **API** («application programming interface ») 22 permettant de transmettre les informations qu'il produit à tout autre système informatique utilisateur du service de surveillance, ou système utilisateur 5. Ceci permet notamment d'intégrer les informations calculées par le système 10 à d'autre systèmes opérationnels existants (par exemple, tout système informatique qui contribue déjà à surveiller l'infrastructure 3, comme par exemple les systèmes informatiques de surveillance des opérations d'un aéroport).

Le système de surveillance 10 est adapté pour détecter et classifier en temps réel, l'ensemble des type anomalie suivantes :

anomalies du segment spatial du GNSS :

pannes ou dégradations volontaires du GNSS 2 dans son fonctionnement d'ensemble (il peut s'agir par exemple d'une panne, erreur ou manoeuvre, survenant au niveau du segment sol du GNSS , et remontée dans les satellites de la constellation);

pannes ou dégradations volontaires des performances des satellites GNSS pris individuellement (perte de puissance d'un satellite, anomalie de l'horloge d'un satellite, etc.);

anomalies locales, au niveau au moins une zone géographique d'intérêt, comme la zone 1 d'implantation de l'infrastructure critique 3, pouvant être étendue à une couverture nationale ou mondiale selon la densité du réseau de récepteurs GNSS disponible :

dégradations, intentionnelles ou non, du type brouillage (« jamming » en anglais) ;

attaque du type leurrage (« spoofing » en anglais) ;

scintillation ionosphérique (variation rapide et irrégulière de la ionosphère, due par exemple à des éruptions solaires) ;

environnement local proche du récepteur dégradant la qualité du signal (multi-trajet) ; et,

panne d'un récepteur GNSS de l'une des sources dont les données sont exploitées.

Le système de surveillance 10 selon l'invention va être présenté plus en détail en référence à la figure 1.

Avantageusement, le système de surveillance 10 prend la forme d'un service informatique, instancié sous une forme logicielle dite en nuage (ou « cloud »).

Le système de surveillance 10 collecte systématiquement et massivement des données provenant de diverses sources de données.

Les sources de données GNSS sont de préférence de trois sortes :

- en premier lieu, des sources de données GNSS associées aux dispositifs de réception du premier type, c'est-à-dire des stations GNSS au sol, de réseaux publics ou commerciaux, comme les stations T1 à T3. Il s'agit de réseaux de plusieurs centaines de stations GNSS offrant une couverture nationale, voire mondiale. Une station GNSS au sol est définie comme un ensemble constitué d'une antenne et d'un récepteur de signaux GNSS, dont la position est fixe et connue, et dont les données (information de navigation et observables) sont accessibles par des moyens réseaux. Par exemple, sur la figure 1, les données des stations GNSS T1, T2 et T3 sont accessibles via un serveur de données 12 relié à un réseau de communication 16 (par exemple l'Internet). Le serveur 12 met à la disposition des utilisateurs, les données GNSS collectées par ces stations GNSS au sol, en temps réel (par exemple, un utilisant le protocole NTRIP), ou en temps différé (mise à disposition de fichiers, dans le format RINEX ou dans un format propriétaire, sur serveur FTP/http/https).

Il s'agit par exemple, pour les réseaux publics, du réseau de station GNSS au sol de l'International GNSS Service - IGS, ou encore ceux du Centre National d'Etudes Spatiales - CNES à travers le réseau REGINA.

Pour les réseaux commerciaux, il s'agit de réseaux de stations GNSS au sol qui fournissent aux utilisateurs un service de positionnement précis, par exemple de type RTK. Le système 10 peut exploiter les données collectées par ce type de réseau.

- en second lieu, des sources de données associées aux dispositif de réception du second type, c'est-à-dire les équipements GNSS au sol permettant d'avoir une couverture locale, i.e. correspondant à la zone 1 à surveiller. Il s'agit essentiellement de récepteurs GNSS, possédés et mis à disposition par les utilisateurs du système 10, positionnés dans la zone géographique 1. Il s'agit des récepteurs R1, R2 et R3 sur la figure 1. Eventuellement, des récepteurs GNSS complémentaires, bas coût, sont ajoutés dans la zone d'intérêt 1 pour obtenir une couverture locale plus dense.

Les équipements GNSS sont connectés d'une manière ou d'une autre à un réseau, comme l'internet, de manière à permettre au système 10 de collecter l'ensemble des données que ces récepteurs produisent en temps réel. Par exemple, sur la figure 1, les équipements GNSS R1, R2 et R3 sont connectés à un serveur 14, qui est lui-même connecté au réseau 16.

- en troisième lieu, des sources de données associées au dispositifs de réception du troisième type, c'est-à-dire les systèmes de vol des aéronefs en circulation. De manière analogue, ces données ADS-B sont collectées par l'intermédiaire de stations de réceptions (U1 à U3 sur la figue 1) d'un fournisseur public ou commercial et mises à disposition par exemple par l'intermédiaire d'un serveur client 16, qui est relié au réseau public 16. Il s'agit ici de sources de données permettant indirectement d'obtenir des données GNSS. Elles correspondent à une couverture nationale voire mondiale.

Ces différentes sources de données permettent d'une part de réaliser un maillage de surveillance étendu afin de détecter les anomalies globales affectant les services GNSS grâce aux différents points de mesure que représentent les dispositifs de réception des signaux GNSS comme les stations GNSS et les systèmes de vol des aéronefs. Ce premier niveau de données permet au système 10 d'assurer une surveillance à l'échelle mondiale ou nationale et, plus marginalement et selon leur répartition, dans la zone géographique d'intérêt.

Ces différentes sources de données permettent d'autre part de réaliser un maillage de surveillance plus précis autour de la zone géographique cible 1, afin de détecter les anomalies locales affectant les services GNSS grâce aux différents points de mesure que représentent les équipements GNSS au sol et éventuellement les systèmes de vol des aéronefs en circulation au-dessus ou à proximité de la zone à surveiller.

Le système de surveillance 10 se fonde sur la prise en compte d'un ensemble de données délivrées, à chaque instant, par les différentes sources.

Cet ensemble de données regroupe les données GNSS que tout récepteur GNSS est capable de fournir ainsi que, dans le mode de réalisation préféré, toutes les données ADS-B que tout système ADS-B est capable de fournir.

Dit autrement, le système de surveillance 10 se fonde sur l'exploitation du maximum de données déjà disponibles, bien qu'hétérogènes, et ne requiert pas de déploiement de matériel coûteux à large échelle.

L'ensemble des données collectées se compose ainsi :

de grandeurs GNSS dites « d'observation », à savoir les mesures des signaux GNSS des satellites GNSS effectuées par les récepteurs GNSS, en particulier des mesures de C/N0, Doppler, pseudo-distance (code), et phase ;
de grandeurs GNSS dites « de navigation », à savoir les éphémérides diffusées par les satellites GNSS et extraites par les récepteurs GNSS ;
enfin, de grandeurs ADS-B diffusées par les aéronefs, en particulier : position, altitude, vitesse, cap et trajectoire de l'aéronef, et des informations de navigation, telles que NAC - Navigation Accuracy Category, NIC - Navigation Integrity Category, SIL - Surveillance Integrity Level, et SDA - System Design Assurance.

Le système de surveillance 10 est un calculateur comportant des moyens de calcul, tels qu'un processeur, et des moyens de mémorisation, tels qu'une mémoire. La mémoire stocke notamment les instructions de programmes d'ordinateurs, en particulier un programme 18 dont l'exécution permet la mise en œuvre du procédé selon l'invention.

Le programme 18 du système de surveillance 10 peut être subdivisé en plusieurs modules fonctionnels. Dans le mode de réalisation préféré illustré sur la figure 1, il comporte ainsi :

- un module 30 de collecte de données, soit les grandeurs GNSS auprès de sources associées à des dispositif de réception du premier et du second type, publiques, commerciales et/ou privées, et les grandeurs ADS-B auprès de source associées à des dispositifs de réception du troisième type, publiques et/ou commerciales ;
- un module 32 de prétraitement des valeurs instantanées des grandeurs GNSS et ADS-B collectées pour obtenir des données GNSS et ADS-B prétraitées ;
- un module 34 d'analyse dite de « crowdsourcing », de détection d'anomalies à partir des données GNSS et ADS-B prétraitées, par mise en œuvre d'un algorithme de multicorellation sur les données prétraitées regroupées selon le type d'anomalie recherché, pour obtenir un ou plusieurs premiers indicateurs d'anomalie;

- un module 36 d'analyse statistique des données GNSS et ADS-B prétraitées, pour déterminer un ou plusieurs seconds indicateurs d'anomalie ;
- un module 38 de fusion des premiers et seconds indicateurs d'anomalie dans des indicateurs globaux, en mettant avantageusement en œuvre des algorithmes de logique floue pour identifier, classifier et caractériser avec un certain niveau de certitude, l'occurrence d'un évènement relevant d'un type brouillage ou leurrage, d'un type manœuvre satellite ou défaillance constellation, ou un type « autre » regroupant les interférences multi-trajets, la scintillation ionosphérique ou les pannes récepteur ;
- un module 40 de géo-référencement des anomalies identifiées;
- un module 42 de levée d'alerte à partir des anomalies géo-référencées en sortie du module 40 ;
- un module 60 de visualisation, pour gérer l'affichage sur un écran de l'IHM 20 permettant de représenter visuellement les informations calculées par le système de surveillance 10 ; et,
- un module 70 de diffusion des alertes aux système utilisateur (dont fait partie l'infrastructure critique), notamment les systèmes utilisateurs impactés par une anomalie, par exemple en mettant en œuvre un système de notification afin de permettre aux gestionnaires de ces système utilisateurs une réaction rapide en cas d'évènement impactant.

L'IHM 20 présente par exemple des tableaux de bord avec les indicateurs globaux, avantageusement associés à chaque type d'anomalie.

L'IHM 20 présente par exemple des vues cartographiques avec un code couleur représentatif des zones géographiques impactées par une anomalie détectée, notamment une anomalie du type brouillage ou leurrage avec, avantageusement, une estimation de la localisation du dispositifs d'interférence causant cette anomalie.

Des tableaux de bords complémentaires présentent une vue « expertise » et donne accès à l'ensemble des données produites, notamment les premiers et seconds indicateurs, ainsi que les données d'entrée, sous forme de séries temporelles, tables et vues statistiques.

L'objectif de ces affichages est de permettre à l'opérateur 4 du système 10 de déclencher les contre-mesures adaptées à la gestion de crise en cas de dégradations GNSS.

Le programme 18 est associé à une base de données 50 de stockage des données prétraitées et des valeurs instantanées de l'ensemble des indicateurs calculés.

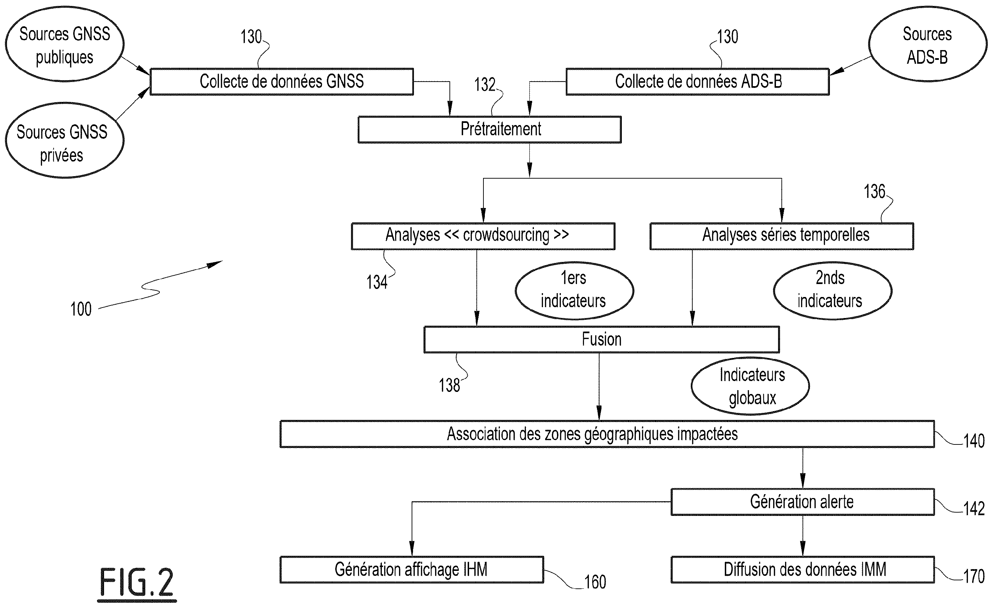

Le procédé selon l'invention va maintenant être présenté en référence à la figure 2.

Le procédé 100 est un procédé de surveillance d'anomalies affectant des signaux GNSS diffusés par un système de navigation par satellites - GNSS et captés par des dispositifs de réception.

Le procédé 100 vise à détecter les anomalies risquant d'affecter le fonctionnement nominal d'une infrastructure ou mission critique utilisant les signaux GNSS.

Le procédé 100 comporte, à chaque itération, une succession d'étapes. Chaque étape correspond à l'exécution d'un module du système de surveillance 10 de la figure 1.

Le procédé 100 débute par une étape 130 d'acquisition de données auprès d'une pluralité de sources de données.

Chacune de ces sources agrégeant des données issues d'une pluralité de dispositifs de réceptions. Chaque dispositif de réception intègre un récepteur GNSS adapté pour traiter les signaux GNSS.

Les données issues d'un dispositif de réception sont soit des données GNSS calculées directement par le récepteur GNSS du dispositif de réception, soit des données ADS-B calculées par le dispositif de réception à partir des données GNSS calculées par le récepteur GNSS de ce dispositif de réception.

L'étape 130 est réalisée par le module 30 qui accède à des serveurs de données.

Pour les dispositifs de réception du type stations GNSS, publiques ou commerciales, les données sont mises à disposition par des fournisseurs de données. Elles peuvent être acquises en temps réel, par exemple en utilisant le protocole de communication NTRIP et le format de données RTCM (« Radio Technical Commission for Maritime Services »).

Pour les dispositifs de réception du type équipement GNSS privés, les données sont par exemple acquises dans un format brut. Dans ce cas, des protocoles et les procédures de décodages spécifiques peuvent être utilisés en alternative au protocole NTRIP et au format RTCM.

**Pour les dispositifs** de réception du type système de vol, les données sont mises à disposition par des fournisseurs de données. Elles peuvent être acquises en utilisant le protocole TCP (« Transmission Control Protocol ») ou http/https (« Hyper Text Transfer Protocol/Hyper Text Transfer Protocol Secure ») sous un format binaire, JSON (« JavaScript Object Notation ») ou CSV (« Comma-separated values »).

Les données GNSS récupérées pour chaque station GNSS et chaque équipement GNSS comportent les valeurs instantanées des premières grandeurs suivantes :

les observables GNSS déterminées par le récepteur GNSS du dispositif de réception, à savoir les mesures des signaux des satellites GNSS par le récepteurs GNSS, en particulier des mesures du rapport de la densité de puissance de la porteuse du signal sur le bruit - rapport C/N0 (« Carrier-to-Noise Density Ratio »), du Doppler, de la pseudo-distance (code), et de la phase ; et,

les informations de navigation déterminées par le récepteur GNSS du dispositif de réception, à savoir les éphémérides diffusées par les satellites du GNSS.

Les données ADS-B récupérées pour chaque système de vol embarqué dans un aéronef, comportent les valeurs instantanées des secondes grandeurs suivantes :

les valeurs de la position, l'altitude, la vitesse, le cap et la trajectoire de l'aéronef, ainsi que des indicateurs spécifiques à la navigation tels que « NAC » (« Navigation Accuracy Category »), « NIC » (« Navigation Integrity Category »), « SIL » (« Surveillance Integrity Level »), et « SDA » (« System Design Assurance »).

L'étape suivante du procédé 100 est une étape 132 de prétraitement des données acquises à l'étape 130.

L'étape 132 est réalisée par le module 32.

Les prétraitements appliqués sont de préférence spécifiques à chaque grandeur. Plus précisément, l'étape 132 applique des traitements comme la normalisation, le filtrage ou le ré-échantillonnage des valeurs instantanées d'une grandeur sur un intervalle temporel.

Avantageusement, les prétraitements comprennent également le traitement des premières grandeurs GNSS pour déterminer des troisièmes grandeurs GNSS, comme l'orbite et l'horloge d'un satellite, l'élévation et l'azimut d'un satellite pour chaque dispositif de réception, la position, la vitesse et le temps pour chaque dispositif de réception, les erreurs associées déterminées à l'aide des valeurs de référence, cohérence code-phase, cohérence code-Doppler, et/ou écart Doppler mesuré et Doppler attendu.

Avantageusement, l'étape 132 permet d'appliquer un algorithme de compensation des effets connus (« detrending ») sur les premières grandeurs et/ou les troisièmes grandeurs pour obtenir des quatrièmes grandeurs. Il s'agit autrement dit de décorréler les données GNSS d'entrée entre elles pour augmenter leur significativité.

Par exemple, les valeurs du rapport C/N0 sont fortement corrélées à l'élévation angulaire du satellite considéré par rapport au récepteur GNSS effectuant la mesure. Ceci empêche de détecter avec efficacité les pannes ou les manoeuvres effectuées par le satellite et affectant la puissance des signaux GNSS qu'il émet. Il s'agit donc de décorréler l'effet de l'élévation sur la mesure de rapport C/N0.

Pour répondre à cette problématique, un polynôme de régression du second ordre est par exemple appliqué sur les mesures du rapport C/N0 en fonction de l'élévation du satellite pour un couple satellite - récepteur GNSS donné. Ce polynôme est défini sur une période temporelle glissante couvrant la période orbitale des satellites. Ce polynôme est par la suite retranché au mesures du rapport C/N0 pour ce couple satellite - récepteur GNSS et obtenir ainsi des résidus de rapport C/N0. Un tel résidu constitue un exemple de quatrième grandeur.

A l'issue de l'étape de prétraitement 132, les données prétraitées sont présentées sous la forme d'une pluralité de séries temporelles, chaque série temporelle correspondant à l'évolution temporelle d'une grandeur.

Le procédé 100 se poursuit par une étape 134 de calcul d'un premier ensemble d'indicateurs d'anomalie par une méthode de « crowdsourcing ».

L'étape 134 est réalisée en exécutant le module 34.

La méthode de « crowdsourcing », qui peut se traduire littéralement par « approvisionnement par la foule », fait référence au croisement d'un grand nombre de mesures afin d'en exploiter les caractéristiques communes et ainsi extraire une information utile.

Cette méthode est ici adaptée pour détecter des perturbations affectant les signaux GNSS d'un ensemble de récepteurs GNSS et/ou d'un ensemble de satellites.

Cette méthode permet en particulier de s'affranchir des bruits de mesure ou d'éventuels phénomènes locaux isolés pour identifier clairement l'occurrence d'un évènement anormal.

Il s'agit d'appliquer un algorithme de multicorrélation à un groupe de plusieurs séries temporelles.

Le regroupement de plusieurs séries temporelles s'effectue avantageusement en fonction du type d'anomalie recherché.

Par exemple, s'il s'agit de détecter les évènements du type anomalie globale (impactant par exemple un satellite), le regroupement s'effectue sur l'ensemble des récepteurs GNSS en visibilité de ce satellite impacté.

Par exemple encore, s'il s'agit de détecter les évènements du type anomalie locale (impactant un ou plusieurs récepteurs GNSS sur Terre, aéronefs, dispositifs ou stations), le regroupement s'effectue sur l'ensemble des émetteurs GNSS, i.e. les satellites en visibilité de la zone géographique où se trouve les récepteurs GNSS impactés.

A à partir des séries temporelles en sortie de l'étape 132, le module 34 calcule ainsi un premier indicateur, qui rend compte des variations communes d'une même grandeur identifiées par un groupe de paires satellite / récepteur GNSS. Dit autrement, le principe est d'identifier la survenue d'un évènement anormal comme un consensus sur une même variation des valeurs d'une même grandeur déterminées par différentes paires satellite / récepteur GNSS au cours de la période d'observation.

Dans le cas par exemple d'une anomalie de puissance émise par un satellite, la méthode de « crowdsourcing » permet d'isoler strictement les variations de puissance liées au satellite, en combinant les mesures de l'ensemble des récepteurs GNSS en visibilité de ce satellite (puisque cet évènement est observé par l'ensemble des récepteurs GNSS au sol) et de s'affranchir de l'ensemble des erreurs locales affectant un récepteur GNSS particulier (pannes, erreurs et bruit de mesure au niveau d'un récepteur GNSS, effets locaux de type multi-trajets, ou erreurs ionosphériques).

Dans le cas par exemple d'une anomalie liée au brouillage ou au leurrage, dont l'effet est local, la méthode de « crowdsourcing » permet d'isoler strictement les distorsions introduites au niveau du récepteur brouillé ou leurré, en combinant les valeurs d'une même grandeur mesurées par le récepteur GNSS pour chacun des satellites en visibilité de ce récepteur GNSS afin d'identifier les variations communes.

Les différents premiers indicateurs calculés à l'étape 134 sont ainsi représentatifs soit d'anomalies locales (brouillage et leurrage), soit globales (pannes ou manœuvres satellite).

Pour les données ADS-B, il s'agit également d'identifier des variations communes dans les informations délivrées par un ensemble d'aéronefs, notamment les informations associées aux performances GNSS.

La méthode de « crowdsourcing » peut être utilisée en hybridant les données de différentes natures, notamment des données GNSS et des données ADS-B.

Par exemple, la méthode permet de calculer un premier indicateur pour une anomalie de puissance émise par un satellite, à l'aide d'une matrice de corrélation pondérée à l'instant k, notée $\Omega^k$, et définie comme:

$$\Omega^k = \left(\omega^k_{i,j}\right) = \left(\frac{Cov\left(\overrightarrow{S^k_i}, \overrightarrow{S^k_j}\right)}{\sigma^k_i \sigma^k_j}\left(1 - p^k_{i,j}\right)\right)$$

avec Sk, respectivement $\overrightarrow{S^k_j}$, un vecteur de $N_c$ valeurs d'une grandeur S sur les signaux GNSS émis par le satellite considéré, ces valeurs étant obtenues à chaque pas d'échantillonnage d'un intervalle $T_k$ ( $T_k = [\![k - N_c; k]\!]$ ) par le récepteur GNSS $i$, respectivement le récepteur GNSS $j$; $Cov$(,), l'opérateur de covariance ; $\sigma^k_i$, respectivement $\sigma^k_j$, la variance sur la distribution des valeurs du vecteur $\overrightarrow{S^k_i}$, respectivement $\overrightarrow{S^k_j}$ ; i et j étant des entiers entre 1 et N, N étant le nombre d'observateurs, i.e. de récepteurs GNSS dont les données ont été collectées et qui sont en visibilité du satellite considéré.

La pondération, représentée par la variable $p^k_{i,j}$, correspond à la valeur p rendant compte de la pertinence statistique de chaque mesure. Plus le nombre d'échantillons $N_c$ est élevé, plus la covariance est pondérée fortement.

Un indicateur scalaire $\beta_k$ représentatif des éléments de la matrice de corrélation pondérée $\Omega^k$ est ensuite calculé par exemple en effectuant une réduction statistique. Par exemple, la médiane (opérateur med) des valeurs de la matrice de corrélation pondérée triangulaire supérieure stricte est utilisée. Une pondération complémentaire $\frac{N}{N_{std}}$ où $N_{std}$ correspond au nombre d'observateurs statistiquement idéal, permet de diminuer davantage le poids de l'indicateur scalaire $\beta_k$ lorsque le consensus ne contient que peu d'observateurs :

$$\beta_k = \text{med}\left(\omega^k_{i,j}\right). \max\left(1, \frac{N}{N_{std}}\right), \quad i, j \in [\![1; N]\!]^2, \quad j > i, \quad N \geq 2$$

Ainsi, plus les données de différents récepteurs GNSS sont corrélées et statistiquement représentatives, plus l'indicateur scalaire est élevé.

L'indicateur $\beta_k$ prend donc une valeur continue, entre 0 et 1. La valeur nulle représente un comportement nominal, sans anomalie, tandis que la valeur unité rend compte de l'occurrence d'un évènement anormale relevant du type d'anomalie associée à cet indicateur.

Parallèlement, le procédé 100 comporte une étape 136 d'analyse statistique des données délivrées en sortie de l'étape 132 de prétraitement.

L'étape 136 est mise en œuvre par le module 36.

L'étape 136 permet de calculer un second ensemble d'indicateurs d'anomalie à partir des séries temporelles en sortie du module 32.

Un tel second indicateur permet de déterminer, au niveau de chaque grandeur considérée isolément des autres, si son évolution temporelle est nominale.

Par exemple, une série temporelle est analysée en appliquant une méthode d'apprentissage automatique (« machine learning »), de préférence non supervisée. Cela permet par exemple d'analyser la dispersion des erreurs d'orbite et d'horloge calculées pour les satellites, ou des erreurs de position, vitesse et temps calculées pour les récepteurs GNSS.

Les seconds indicateurs d'anomalie ont des valeurs continues entre 0 et 1, la valeur nulle représentant le cas nominal, sans anomalie, la valeur unité rendant compte de la présence d'un évènement anormal.

Le procédé 100 comporte une étape 138 de fusion de l'ensemble des indicateurs calculés lors des étapes 134 et 136 de manière à obtenir des indicateurs globaux.

Cette étape est mise en œuvre par le module 38.

Chaque indicateur global évolue entre 0 (anomalie dans la donnée très peu probable) et 1 (anomalie dans la donnée fort probable) de manière continue et croissante selon la probabilité de présence effective de l'anomalie à laquelle cet indicateur global est associé.

Les indicateurs globaux d'anomalie sont représentatifs des anomalies suivantes :

présence d'une manœuvre ou panne satellite ou constellation (indicateur défini pour chaque satellite du système de navigation par satellites 2) ;
présence de brouillage, définie pour les récepteurs GNSS au sol et à bord des d'aéronefs dans ou au-dessus de la zone d'intérêt ;
présence de leurrage, pour les récepteurs GNSS au sol et à bord des d'aéronefs dans ou au-dessus de la zone d'intérêt ;
présence d'autres dégradations non critiques (multi-trajets, scintillation ionosphérique ou panne récepteur) ;

Le calcul de ces indicateurs globaux est réalisé par exemple en appliquant des algorithmes d'inférence de logique floue (« fuzzy logic »), qui permettent d'obtenir des sorties non binaires, pour éviter les effets de seuils et obtenir des valeurs plus représentatives de la réalité, l'interprétation et les seuils associés étant laissés à la discrétion de l'opérateur.

L'hybridation des données GNSS directes et des données GNSS indirectes peut également être faite lors du calcul de certains indicateurs globaux.

Par exemple, un algorithme d'inférence par logique floue s'appuie sur une table de vérité appliquée à la combinaison d'un sous-ensemble des indicateurs calculés aux étapes 134 et 136, réglés au préalable par analyse statistique.

Un indicateur global peut être exploité dans le calcul d'un autre indicateur global. Typiquement, un indicateur global de panne ou manœuvre satellite peut être exploité pour inhiber la levée de faux positifs sur un indicateur global de brouillage ou de leurrage.

Une étape 140, réalisée par le module 40, permet ensuite d'agréger tout ou partie des indicateurs globaux d'anomalies, notamment ceux associés à une anomalie du type brouillage et leurrage, afin d'analyser la synchronisation temporelle des évènements associés, leur répartition géographique, ainsi que leurs caractéristiques, afin :

d'éliminer les faux positifs ;
de déterminer les zones géographiques impactées par un évènement ;
d'estimer la localisation approximative des brouilleurs et leurres associés à une zone impactée.

Par exemple, l'usage des méthodes de regroupement (« clustering ») permet de définir les zones géographiques impactées par des anomalies levées par un ensemble de récepteurs à un instant donné.

En cas d'évènement du type brouillage ou leurrage, cette étape met avantageusement en œuvre une recherche de la localisation du matériel cause des interférences.

La localisation est estimée à partir d'un modèle physique d'interférences et des mesures prétraitées provenant des récepteurs GNSS, préférentiellement les équipements GNSS privés dans la zone impactée.

Par exemple, est mis en œuvre une méthode itérative basée sur les caractéristiques probables du brouilleur ou leurre recherché (puissance et positions potentielles et paramètres d'une zone d'influence elliptique) en faisant évoluer son rayon d'action. Les caractéristiques les plus probables retenues pour le matériel recherché minimisent la puissance de l'émetteur et interceptent le minimum de points de mesure où aucune anomalie n'est identifiée.

La criticité de la dégradation dans une zone d'intérêt est de préférence définie. Il s'agit d'une variable à valeurs continues dans l'intervalle « 0 » et « 1 ». Elle est représentative des indicateurs globaux d'anomalies calculés pour cette zone d'intérêt. Elle correspond par exemple à la médiane de ces indicateurs globaux. Eventuellement, la criticité est pondérée par un paramètre représentatif du niveau de menace estimé du matériel responsable de la dégradation.

Dans l'étape 142, correspondant à l'exécution du module 42, les valeurs instantanées des indicateurs géo-référencés sont analysées. Des règles de génération d'alerte, par exemple du type logique, qui combinent un ou plusieurs indicateurs (et/ou grandeurs dérivées) sont testées afin de générer automatiquement une alerte lorsque l'une d'entre elles est vérifiée dans une zone géographique d'intérêt.

Ainsi par exemple, en cas de dégradation, c'est-à-dire de passage d'un indicateur global au-dessus d'un seuil prédéterminé par l'opérateur, une alerte est émise pour l'anomalie correspondant à cet indicateur. De la même manière, une configuration permet de ne lever des alertes que si des évènements surviennent dans des zones géographiques spécifiques définies par l'opérateur du système 10.

Si le cas d'usage le requiert, l'étape 170 est réalisée en exécutant le module 70. L'étape 170 consiste à envoyer une alerte de manière sécurisée, à un système utilisateur 5 impactés par la dégradation, terminal de l'infrastructure ou des utilisateurs cibles, comme les pilotes d'aéronef par diffusion d'un message dans un format adapté, par exemple le format « NOTAM » (« NOTice to AirMen »).

Cela permet aux utilisateurs cibles de réagir rapidement en cas d'évènement impactant. Cette réaction peut être par exemple décider de ne plus utiliser de GNSS pendant la période de dégradation, ou encore de basculer sur un autre système de navigation (intertiel, odomètre, LiDar, etc.), de datation (serveur de temps), ou un autre système de positionnement par exemple en utilisant les stations de base d'un réseau de communication mobile. En variante, la prise de décision peut consister en l'évitement de la zone géographique ou temporelle impactée, par un report de mission, et/ou la sollicitation des autorités compétentes pour neutraliser un brouilleur ou leurre et rétablir la situation.

A chaque pas de temps, les données instantanées produites aux étapes 130, 132, 134, 136, 140, et/ou 142 sont avantageusement mémorisées dans la base de données 50.

Périodiquement, dans une étape 160 de génération d'affichage, le module 60 est exécuté. Il interroge la base de données 50 pour générer dynamiquement les visualisations à afficher sur l'interface homme-machine - IHM 20.

L'IHM 20 présente les indicateurs finaux délivrés à l'étape 142, de préférence sous la forme d'un tableau de bord contenant par exemple des vues cartographiques de la dont le code couleur est représentatif de situation des anomalies de type brouillage et leurrage associées aux estimations de localisation des matériels d'interférences et zones d'impact associées. De plus, des indicateurs associés à chaque satellite, représentatifs des anomalies de type pannes et manœuvres satellite sont présentés. L'objectif de ces interfaces est de permettre à un opérateur 4 de déclencher les contre-mesures adaptées à la gestion de crise en cas de dégradations GNSS.

Des tableaux de bords complémentaires présentent une vue « expert » donnant accès à l'ensemble des données produites au cours des différentes étapes du procédé 100, sous forme de séries temporelles, tables et vues statistiques.

Dans un premier cas d'application, la surveillance de la puissance émise des satellites GNSS et les éventuelles dégradations, pannes ou manœuvres intervenant sur ces signaux, fait partie des éléments clés surveillés par les agences spatiales. Ces évènements sont essentiellement mesurés par des antennes haut gain qui permettent d'avoir une évaluation fine de la puissance émise par les satellites. Or ces antennes ne peuvent suivre qu'un nombre de satellites limité à la fois et doivent être programmées à l'avance selon les orbites à suivre, sans savoir lesquels sont à surveiller en priorité.

Le système de surveillance 10 permet d'identifier en temps réel et avec une couverture mondiale, tous les satellites présentant ce type d'anomalies, et d'avoir une première estimation de la variation de puissance émise. Les antennes haut gain pourront alors être pilotées pour suivre uniquement les satellites identifiés et affiner l'estimation de la radiation de puissance.

D'autres cas d'application se déclinent sur la surveillance du brouillage et du leurrage qui représentent un enjeu majeur qui doit être traité, dans de nombreux domaines, en particulier :

pour la surveillance du trafic aérien, impliquant aéroports, gestion du trafic aérien et compagnies au travers des pilotes, pour lesquels le brouillage et le leurrage GNSS peuvent impliquer des accidents aéronautiques (collisions entre aéronefs, crashs d'aéronefs lors d'approches automatiques) et l'exploitation de données de navigation erronées par le trafic aérien. L'usage du système selon l'invention permet d'identifier en temps réel les évènements affectant l'instrumentation à bord des aéronefs, d'alerter l'ensemble des parties prenantes (par exemple les pilotes au travers de messages NOTAM comme le recommande l'agence européenne de contrôle du trafic aérien), et de prendre les mesures nécessaires pour rétablir une situation nominale (par exemple localiser et neutraliser un matériel d'interférence), en lien avec les autorités compétentes, ou organiser des manœuvres d'évitement des zones impactées ;

de la même manière, le lancement spatial développe une dépendance de plus en plus forte pour laquelle la présence de brouillage ou leurrage peut impliquer une trajectoire erronée du lanceur et occasionner des dégâts matériels et humains considérables. Dans ce contexte, l'usage de l'invention permet de prendre les mesures adaptées en temps réel en cas de menace identifiée (report de vol, ou neutralisation du lanceur) ;

de la même manière, les systèmes et missions liés à la défense ont une dépendance forte aux systèmes GNSS, en particulier GPS. La présence de dégradations peut engendrer des erreurs de trajectoire dans certains systèmes d'armement, ou d'erreurs dans les solutions de suivi tactique de troupes et d'équipements. Le système selon l'invention permet ainsi de les identifier pour mettre en œuvre les actions et contre-mesures nécessaires pour garantir la réussite d'une mission ;

de la même manière, les villes intelligentes dont les transports autonomes aériens ou terrestres, de biens ou de personnes, se développent, ont une dépendance critique aux systèmes GNSS. Les dégradations évoquées peuvent mettre en jeu la sécurité des biens et des personnes en perturbant le système de navigation de ces véhicules ;

de la même manière, des infrastructures critiques, comme les infrastructures de transport d'énergie, ont également une dépendance aux systèmes GNSS pour de la datation précise des données. Des perturbations telles que le brouillage et le leurrage ont alors un fort impact sur leur fonctionnement ;

enfin, de la même manière, l'usage de système GNSS pour la datation est critique pour l'horodatage des transactions financières, pour lesquelles les dégradations évoquées peuvent avoir un impact économique majeur.

Le système selon l'invention permet par exemple d'indiquer à des systèmes de navigation embarqués que le positionnement par satellites n'est plus fiable et qu'il faut basculer vers une autre source de positionnement pendant la durée de la dégradation.

Il apparaît que l'usage de l'invention peut se décliner sous plusieurs niveaux :

usage de type opérateur, pour lequel les informations délivrées assurent le suivi temps réel de la situation GNSS à l'échelle mondiale, nationale et / ou d'une zone géographique donnée ;

usage pour les utilisateurs finaux des services GNSS, à destination desquels des alertes circonstanciées sont émises par le système afin de leur permettre de mettre en œuvre des contre-mesures adaptées (par exemple, utilisation d'autres sources de capteurs ou de données de géolocalisation ou datation), ou des actions directes d'évitement de l'impact des dégradations (par exemple, manœuvre de contournement d'une zone de brouillage ou leurrage).

La structure modulaire de la composante logicielle du système de surveillance selon l'invention facilite toute mise à l'échelle (« scalability ») de nature à permettre l'acquisition et le traitement de données fournies par un nombre très important de sources. Cependant, d'autres manières de développer cette composante logicielle sont envisageables.

En s'appuyant sur des données disponibles dans tout type de récepteur GNSS, l'invention permet d'ingérer et de traiter systématiquement de nouvelles données, quelle que soit la nature ou la qualité de l'information collectée. Le système de surveillance selon l'invention assure ainsi la détection multi-anomalies par un unique système agrégeant les données issues de récepteur hétérogènes.

L'invention s'appuie sur des moyens délivrant des observables GNSS directes. En variante, elle s'appuie sur des moyens délivrant des observables GNSS indirectes. Le cas des dispositifs de vol délivrant des observables ADS-B (pour "Automatic dependent surveillance-broadcast" ou « Surveillance Automatique Dépendante par Diffusion ») a plus particulièrement été décrit dans ce qui précède, mais d'autres dispositifs connus permettent de délivrer d'autres observables GNSS indirectes, comme par exemple les dispositifs AIS (pour "Automatic Identification System" ou système d'identification automatique »). Dans ce cas le dispositif de mesure est embarqué à bord d'un porteur qui est un navire. Dans encore une autre variante, correspondant au mode de réalisation présenté ci-dessus en détail, l'invention s'appuie sur des moyens délivrant des observables GNSS directes et des moyens délivrant des observables GNSS indirectes.

Les données ADS-B permettent de renforcer la couverture nationale/régionale, mais également, lorsqu'un aéronef survole la zone géographique d'intérêt, de renforcer la couverture locale.

Si, dans le cas d'usage du mode de réalisation préféré décrit précédemment, la zone géographique d'intérêt est associé à une infrastructure critique en particulier, plus généralement la surveillance peut se faire sur une zone géographique étendue, sans rapport avec une infrastructure particulière. Ce sont ensuite les alertes levées qui sont transmises, en fonction de la géolocalisation de l'évènement anormal détecté, vers des utilisateurs finaux qui sont abonnés au service de surveillance.

A terme, il apparait que l'usage de l'ensemble des réseaux disponibles permettra une surveillance fine de la situation mondiale.

L'homme du métier constatera que le système selon l'invention peut être déployé à moindre coût, en particulier matériel, et sans modification importante des infrastructures déjà existantes.

**Revendications**

1. Procédé (100), mis en œuvre par ordinateur, de surveillance d'anomalies affectant des signaux d'un système de navigation par satellites - GNSS (2) en visibilité d'une zone géographique d'intérêt, dit signaux GNSS, **caractérisé en ce que** le procédé consiste à :

acquérir (130) des données auprès d'une pluralité de sources de données, chaque source de données de la pluralité de sources de données agrégeant des données issues d'une pluralité de dispositifs de réception, chaque dispositif de réception intégrant un récepteur GNSS adapté pour traiter les signaux GNSS de manière à déterminer des premières grandeurs, les données comportant des valeurs instantanées des premières grandeurs, calculées par le récepteur GNSS d'un dispositif de réception, et/ou des valeurs instantanées de secondes grandeurs, une seconde grandeur étant déterminée par ledit dispositif de réception à partir d'une ou plusieurs premières grandeurs calculées par le récepteur GNSS dudit dispositif de réception, les dispositifs de réception de la pluralité de dispositifs de réception étant géographiquement répartis pour obtenir une couverture couvrant au moins la zone géographique d'intérêt ;

prétraiter (132) les données acquises pour obtenir des données prétraitées, chaque données prétraitée prenant la forme d'une série temporelle ;

calculer (134) un ou plusieurs premiers indicateurs d'anomalie, chaque premier indicateur d'anomalie étant obtenu en appliquant un algorithme de multicorrélation à un groupe de plusieurs données prétraitées ;

calculer (136) un ou plusieurs seconds indicateurs d'anomalie pour chaque données prétraitée, considérée individuellement, par application d'un algorithme de traitement statistique ;

fusionner (138) les premiers et seconds indicateurs d'anomalie pour obtenir des indicateurs globaux d'anomalie, chaque indicateur global d'anomalie étant indicatif d'une probabilité d'occurrence d'un type d'anomalie particulier ;

générer (142) une alerte d'occurrence d'un évènement relevant d'un type d'anomalie, lorsqu'une règle d'occurrence adaptée audit type d'anomalie est vérifiée, ladite règle d'occurrence étant fondée sur le ou les indicateurs globaux associés audit type d'anomalie.

2. Procédé selon la revendication 1, dans lequel le type d'anomalie relève :
d'une panne ou d'une manœuvre d'au moins un satellite du GNSS ;

   - d'un brouillage ;
   - d'un leurrage ; ou,
   - d'un multi-trajets, d'une scintillation ionosphérique, et d'une panne de récepteur GNSS.

3. Procédé selon la revendication 2, comportant en outre une étape (140) d'association des indicateurs globaux caractérisant le type d'anomalie d'un brouillage et/ou le type d'un leurrage, à une position géographique à partir d'une position des dispositifs de réception ayant permis de générer l'alerte d'occurrence de l'évènement correspondant.

4. Procédé selon la revendication 3, comportant en outre une estimation d'une localisation du matériel d'interférence responsable dudit évènement.

5. Procédé selon l'une quelconque des revendications 1 à 4, comportant en outre une étape (160) d'affichage de l'alerte générée sur une interface homme-machine (20) et/ou une étape (170) de notification de l'alerte générée à un système utilisateur (5) impacté par l'évènement.

6. Procédé selon l'une quelconque des revendications 1 à 5, dans lequel les premières grandeurs comportent, pour chaque dispositif de réception et pour chaque satellite du GNSS en visibilité dudit dispositif de réception une mesure du C/N0, du Doppler, d'une pseudo-distance, et d'une phase, ainsi que des informations relatives aux éphémérides diffusées par chaque satellite du GNSS.

7. Procédé selon l'une quelconque des revendications 1 à 6, dans lequel les secondes grandeurs comportent, pour chaque dispositif de réception du type système de vol d'un d'aéronef, une position, une altitude, une vitesse, un cap et une trajectoire d'un porteur, et une ou plusieurs informations relatives aux performances de navigation.

8. Procédé selon l'une quelconque des revendications 1 à 7, dans lequel l'étape (138) de fusion met en œuvre un algorithme de logique floue.

9. Procédé selon l'une quelconque des revendications 1 à 8, dans lequel l'étape de prétraitement (132) consiste à appliquer un algorithme de compensation entre plusieurs premières grandeurs.

10. Procédé selon l'une quelconque des revendications 1 à 9, dans lequel l'alerte générée est transmise à un utilisateur final dont un système est impacté par l'évènement associée à l'alerte, afin de mettre en œuvre une contremesure adaptée.

11. Procédé selon l'une quelconque des revendications 1 à 10, dans lequel les première grandeurs sont des grandeurs GNSS et les secondes grandeurs sont des données ADS-B et/ou AIS.

12. Procédé selon l'une quelconque des revendications 1 à 11, dans lequel les sources de données comportent des sources de données gérées par des fournisseurs de données, publiques et/ou commerciales, de couverture mondiale et/ou nationale et/ou des sources de données privées, associées à des récepteurs GNSS d'opportunité ou déployés spécifiquement, de couverture locale.

13. Programme d'ordinateur comprenant des instructions de code de programme pour l'exécution des étapes du procédé selon l'une quelconque des revendications 1 à 12 lorsque ledit programme est exécuté sur un ordinateur.

14. Système de surveillance (10) comportant un ordinateur programmé pour l'exécution des étapes du procédé selon l'une quelconque des revendications 1 à 12.

FIG.1

FIG.2

EP 4 745 626 A1

Europäisches
Patentamt

European
Patent Office

Office européen
des brevets

**RAPPORT DE RECHERCHE EUROPEENNE**

Numéro de la demande

EP 25 21 5964

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2017/040076 A1 (QUALCOMM INC [US]) 9 mars 2017 (2017-03-09) | 1-6, 8-10, 12-14 | INV. G01S19/08 |
| Y | * figure 2 * <br> * alinéa [0023] - alinéa [0024] * <br> * alinéa [0035] * <br> * alinéa [0039] - alinéa [0045] * <br> * alinéa [0061] - alinéa [0064] * <br> * alinéa [0073] * <br> * alinéa [0089] - alinéa [0091] * <br> * alinéa [0099] - alinéa [0100] * <br> ----- | 7,11 | |
| X | LEWIS STEVEN ET AL: "Secure GPS Data for Critical Infrastructure and Key Resources: Cross-Layered Integrity Processing and Alerting Service`", 20180901, vol. 65, no. 3, 1 septembre 2018 (2018-09-01), pages 389-403, XP056015216, * figures 4,5 * * pages 394-396 , section "Algorithm Design" * * page 396, section "AlertingServices" * ----- | 1-6, 8-10, 12-14 | |
| A | WO 2019/060111 A1 (QUALCOMM INC [US]) 28 mars 2019 (2019-03-28) * le document en entier * ----- <br> -/-- | 1-14 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 23 mars 2026 | Hekmat, Taymoor |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

...........................................................................................
& : membre de la même famille, document correspondant

EPO FORM 1503 03.82 (P04C02)

**page 1 de 2**

Europäisches
Patentamt

European
Patent Office

Office européen
des brevets

**RAPPORT DE RECHERCHE EUROPEENNE**

Numéro de la demande

EP 25 21 5964

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | LIU ZIXI ET AL: "Real Time Detection and Estimation of GNSS Interference Affected Region Using ADS-B Data and Bayesian Modeling", GNSS 2023 - PROCEEDINGS OF THE 36TH INTERNATIONAL TECHNICAL MEETING OF THE SATELLITE DIVISION OF THE INSTITUTE OF NAVIGATION (ION GNSS+ 2023), THE INSTITUTE OF NAVIGATION, 8551 RIXLEW LANE SUITE 360 MANASSAS, VA 20109, USA, 15 septembre 2023 (2023-09-15), pages 4121-4129, XP056018427, * figures 1,2,5 * * pages 4122-4126, section III * ----- | 7,11 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 23 mars 2026 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**EP 4 745 626 A1**

## ANNEXE AU RAPPORT DE RECHERCHE EUROPEENNE
## RELATIF A LA DEMANDE DE BREVET EUROPEEN NO.

EP 25 21 5964

23-03-2026

| Document brevet cité au rapport de recherche | Date de publication | Membre(s) de la famille de brevet(s) | | Date de publication |
|---|---|---|---|---|
| WO 2017040076 A1 | 09-03-2017 | CN | 107949795 A | 20-04-2018 |
| | | EP | 3345018 A1 | 11-07-2018 |
| | | JP | 2018534537 A | 22-11-2018 |
| | | KR | 20180050366 A | 14-05-2018 |
| | | US | 2017070971 A1 | 09-03-2017 |
| | | WO | 2017040076 A1 | 09-03-2017 |
| WO 2019060111 A1 | 28-03-2019 | CN | 111133337 A | 08-05-2020 |
| | | EP | 3685188 A1 | 29-07-2020 |
| | | EP | 4235221 A2 | 30-08-2023 |
| | | US | 2019094371 A1 | 28-03-2019 |
| | | US | 2021157011 A1 | 27-05-2021 |
| | | WO | 2019060111 A1 | 28-03-2019 |

EPO FORM P0460